# EUROPEAN PATENT APPLICATION

(11) **EP 1 005 042 A2**
(43) Date of publication of application: **31.05.2000**
(21) Application number: 99309362.4
(22) Date of filing: 24.11.1999
(51) Int. Cl.: G11B 27/036, G11B 27/032, G11B 15/18, H04N 7/24, H04N 5/926, H04N 9/804

(54) **Method and apparatus for recording and reproducing video signals**

(30) Priority: 26.11.1998 JP 33628298
(71) Applicant: SONY CORPORATION, Tokyo 141 (JP)
(72) Inventor: Watanabe, Ryuji, Shinagawa-ku, Tokyo (JP)
(74) Representative: DeVile, Jonathan Mark

(57) **Abstract**

In a simple video-signal recording and reproducing apparatus for recording and reproducing MPEG video signals on and from a recording medium, an editing operation can be performed from a picture positioned midway within one GOP. In splicing another image with a base image, concerning the base image, an I- or P-type picture and the B-type pictures encoded with backward reference to the I- or P-type pictures are retained. Basically, another image is spliced with the base image starting from an I-type picture, and any B-type picture encoded with backward reference to the I-type picture are also recorded.

## Description

The present invention relates to methods and apparatuses for recording and reproducing video signals.

MPEG video signals are compressed and coded in units of groups, which are referred to as Group of Pictures (GOP). Each group of pictures is composed of a plurality of pictures of three different types, I-pictures, P-pictures, and B-pictures. I-pictures are closed pictures within a frame or a field, and an I-picture is a single independent picture without reference to other pictures. P-pictures obtain predictions from temporally preceding I-or P-pictures, whereas B-pictures obtain predictions from both the nearest preceding and following I- or P-pictures.

MPEG video signals are highly efficiently compressed. When a video signal is converted into an MPEG video signal, i.e., an MPEG bitstream, the temporal order may be reversed within a single GOP. Thus, in performing an editing operation, for example, an image-splicing operation, half way through a single GOP, the order of pictures may be reversed if the pictures are simply spliced, and the spliced portions are not decoded correctly, which may result in the disturbance of the image and the generation of noise.

In performing an editing operation in a video-signal recording and reproducing apparatus for recording and reproducing MPEG video signals, GOPs are generally used as units to perform such an operation. However, in order to satisfy the editor's sensibilities, with a large number of pictures forming a GOP, it is desirable to start editing a picture positioned midway within one GOP.

Various aspects and features of the present invention are defined in the appended claims.

According to one aspect of the present invention, there is provided a video-signal recording and reproducing apparatus for recording a video signal encoded by an MPEG method on a recording medium and for reproducing the MPEG-encoded video signal from the recording medium. The improvement includes that an image-splicing operation is performed in a period at which one of an I-type picture or a P-type picture appears.

Embodiments of the invention relate to a video-signal recording and reproducing apparatus for recording/reproducing Moving Picture Experts Group (MPEG) video signals and also for performing an editing operation, for example, an image-splicing operation. Embodiments of the invention also pertain to a video-signal recording and reproducing method for use in the above type of apparatus.

Embodiments of the present invention can provide a simple video-picture recording and reproducing apparatus for recording and reproducing MPEG video signals on and from recording media, in which an image-splicing operation can be started from a picture positioned midway within one GOP so as to achieve smooth unbroken pictures.

According to another aspect of the present invention, there is provided a video-signal recording and reproducing method for use in a video-signal recording and reproducing apparatus for recording a video signal encoded by an MPEG method on a recording medium and for reproducing the MPEG-encoded video signal from the recording medium. The improvement includes that an image-splicing operation is performed in a period at which one of an I-type picture or a P-type picture appears.

With this arrangement, the image-splicing operation can be performed from a picture midway in one GOP. When the spliced portion is reproduced, smooth unbroken pictures or at least improved pictures are implemented.

According to the aforementioned video-signal recording and reproducing apparatus and method, in performing the image-splicing operation, recording may be started from an I-type picture, and the I-type picture and any B-type picture encoded with backward reference to the I-type picture may be recorded.

With this arrangement, when an image to be spliced is reproduced, all the pictures including the first picture at which the splicing operation is started can be correctly reconstructed, resulting in a perfect image.

According to the video-signal recording and reproducing apparatus and method, in performing the image-splicing operation, when an I-type picture is designated as a final picture to be retained selected from pictures recorded on the recording medium, the designated I-type picture and all B-type pictures encoded with backward reference to the I-type picture may be retained in the recording medium. When a P-type picture is designated as a final picture to be retained selected from the pictures recorded on the recording medium, the designated P-type picture and all B-type pictures encoded with backward reference to the P-type picture may be retained in the recording medium. When a B-type picture is designated as a final picture to be retained selected from the pictures recorded on the recording medium, the designated B-type picture and all B-type pictures continuous from the designated B-type picture may be retained in the recording medium. Thereafter, an image to be spliced may be recorded.

With this arrangement, when the base image is reproduced, all the pictures including the final picture immediately before the splicing operation has been performed can be correctly reconstructed, resulting in a perfect image.

According to the aforementioned video-signal recording and reproducing apparatus and method, in performing the image-splicing operation, when an I-type picture is designated as a final picture of a base image, the designated I-type picture and all B-type pictures encoded with backward reference to the I-type picture may be recorded. When a P-type picture is designated as a final picture of the base image, the designated P-type picture and all B-type pictures encoded with backward reference to the P-type picture may be recorded. When a B-type picture is designated as a final picture of the base image, the designated B-type picture and all B-type pictures continuous from the designated B-type picture may be recorded. Thereafter, a recording operation may be suspended.

With this arrangement, even when the image-splicing operation is conducted while recording, all the pictures including the final picture can be correctly or at least more accurately reconstructed, resulting in a perfect image or at least improved image.

The invention will now be described by way of example with reference to the accompanying drawings, throughout which like parts are referred to by like references, and in which:
Fig. 1 is a block diagram illustrating a video-signal recording and reproducing apparatus for recording images recorded with a camera as MPEG video signals on tape and for reproducing them from the tape;
Fig. 2 illustrates the temporal relationship between images before being MPEG-encoded and a video bitstream after being MPEG-encoded;
Fig. 3 illustrates the data arrangement in relation to tracks when the MPEG-encoded image data is recorded on tape by helical scanning;
Fig. 4 illustrates how the reproduced images are viewed when another image starting from I(b12) is spliced with the base image;
Fig. 5 illustrates the data arrangement on the tape when another image starting from I(b12) is spliced with the base image;
Fig. 6 illustrates how the reproduced images are viewed when another image starting from I(b6) is spliced with the base image;
Fig. 7 illustrates the data arrangement on the tape when another image starting from I(b6) is spliced with the base image;
Fig. 8 illustrates how the reproduced images are viewed when another image starting from I(bll) is spliced with the base image;
Fig. 9 illustrates the data arrangement on the tape when another image starting from I(bll) is spliced with the base image;
Fig. 10 illustrates how the reproduced images are viewed when another image starting from I(bll) is spliced with the base image;
Fig. 11 illustrates the data arrangement on the tape when another image starting from I(bll) is spliced with the base image;
Fig. 12 illustrates how the reproduced images are viewed when an image-splicing operation is performed by changing the recording and reproducing apparatus from the recording mode to the recording-suspending mode, and again back to the recording mode;
Fig. 13 illustrates the data arrangement on the tape when the recording and reproducing apparatus is changed from the recording mode to the recording-suspending mode; and
Fig. 14 illustrates the data arrangement on the tape when the recording and reproducing apparatus is changed from the recording mode to the recording-suspending mode, and again back to the recording mode.

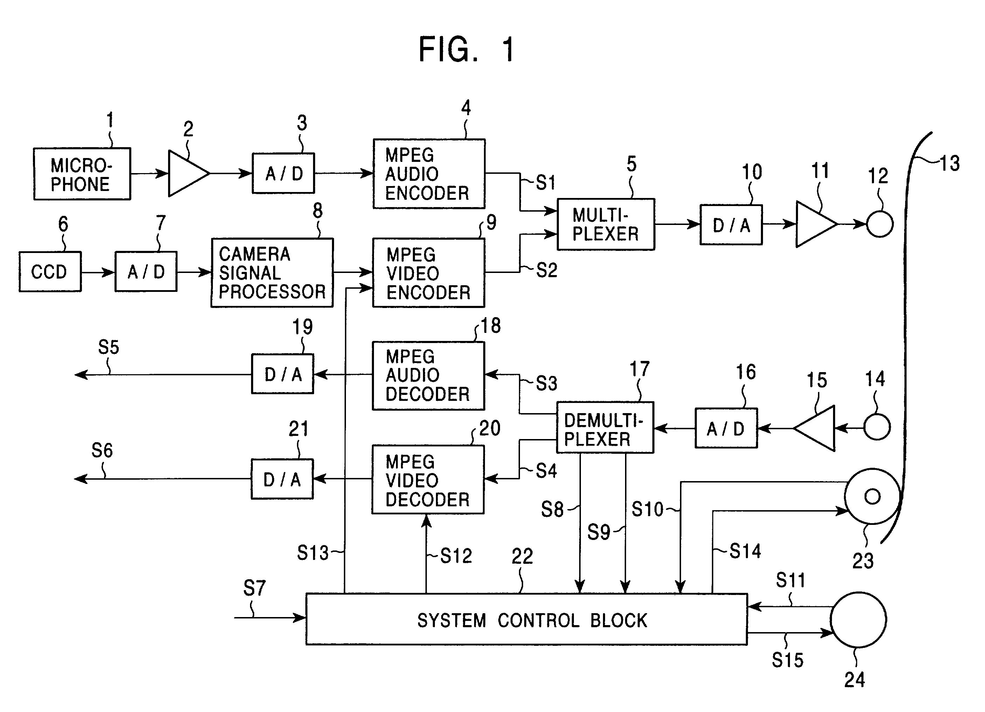

An embodiment of the present invention is described in detail below with reference to Figs. 1 through 14.

In the drawings, I-pictures, P-pictures, and B-pictures are indicated by I, P, and B, respectively. The symbols a and b in parentheses preceded by I, P, and B represent titles of continuous pictures. The numbers after a and b designate picture numbers, which indicate the order before the pictures are MPEG-encoded. That is, the pictures are to be displayed on the screen in ascending numerical order. One picture corresponds to one frame.

Fig. 1 is a block diagram illustrating a video-signal recording and reproducing apparatus for recording a picture recorded with a camera as an MPEG video signal on tape and for reproducing it from the tape.

The recording system of the apparatus is as follows. An audio signal obtained by converting a sound pressure into an analog sound signal by a microphone 1 is amplified by a microphone amplifier 2, and is converted into digital data by an analog-to-digital (A/D) converter 3. Subsequently, the digital data is converted into an MPEG audio bitstream S1 by an MPEG audio encoder 4 and is then input into a multiplexer 5.

Meanwhile, a camera image signal is photoelectrically converted by a charge-coupled device (CCD) 6 and is converted into digital data by an analog-to-digital (A/D) converter 7. Subsequently, the digital data is processed by a camera signal processor 8 and is then converted into an MPEG video bitstream S2 by an MPEG video encoder 9. The MPEG video bitstream S2 is then input into the multiplexer 5.

The multiplexer 5 multiplexes the input MPEG audio bitstream S1 and the input MPEG video bitstream S2. The multiplexed bitstream is converted into an analog signal by a D/A converter 10 and is then amplified by a recording amplifier 11. As a result, the MPEG audio/video data is recorded on tape 13 via a recording head 12.

The reproduction system of the apparatus is as follows. The MPEG audio/video data recorded on the tape 13 is extracted by a reproduction head 14 and is amplified by a reproduction amplifier 15. The resulting reproduced RF signal is further converted into digital data by an A/D converter 16.

The digital data is separated into an MPEG audio bitstream S3 and an MPEG video bitstream S4 by a demultiplexer 17.

The MPEG audio bitstream S3 is decoded by an MPEG audio decoder 18 into the digital audio signal and is converted into an analog audio signal S5 by a D/A converter 19 and is then output.

Meanwhile, the MPEG video bitstream S4 is decoded by an MPEG video decoder 20 into the digital video signal and is converted into an analog video signal S6 by a D/A converter 21.

A system control block 22 is now discussed in detail. The following types of information are input into the system control block 22:
(1) key input information S7 input from a user;
(2) track number S8 which is currently being reproduced from the tape 13;
(3) type and number of MPEG picture S9 included in the track which is currently being reproduced from the tape 13;
(4) rotation information S10 of a capstan motor 23; and
(5) rotation information S11 of a drum motor 24.

The following types of information are output from the system control block 22:
(1) output-picture control information S12;
(2) picture-type control information S13 of a picture to be encoded;
(3) capstan-motor control information S14; and
(4) drum-motor control information S15.

An overview of the operation of the system control block 22 is given below.

According to the key input information S7 from the user, the state of the apparatus is changed to, for example, a normal reproduction mode, a normal recording mode, a reproduction-suspending mode, or a recording-suspending mode. Thus, the system control block 22 controls the capstan motor 23 in accordance with the capstan-motor control information S14 based on the capstan-motor rotation information S10, and controls the drum motor 24 in accordance with the drum-motor control information S15 based on the drum-motor rotation information S11. The drum-motor rotation information S11 includes rotational speed and rotational phase information of the drum motor 24.

According to the state of the apparatus, such as the normal reproduction mode, the system control block 22 transmits the output-picture control information S12 to the MPEG video decoder 20, based on the track number S8 which is currently being reproduced from the tape 13 and the picture type and picture number S9 of the picture contained in the above-mentioned track, both information S8 and S9 being detected by the demultiplexer 17. Also, the system control block 22 transmits the picture-type control information S13 to the MPEG video encoder 9

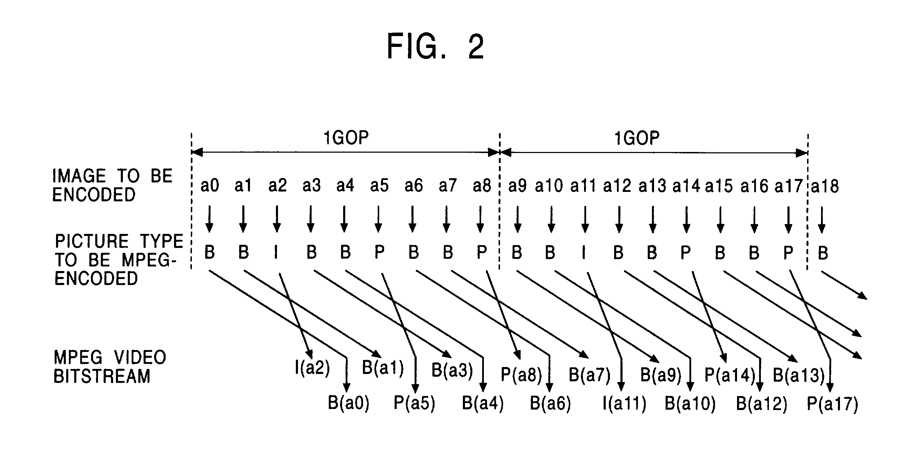

A description is given below with reference to Fig. 2 of the temporal relationship between, for example, a National Television System Committee (NTSC) image before being MPEG-encoded by the MPEG video encoder 9 and an MPEG video bitstream after being MPEG-encoded. It is now assumed that the number of pictures to be contained in a GOP is nine and an I-type picture or a P-type picture appears every three frames.

Before encoding a picture as a B-type picture, as shown in Fig. 2, it is necessary to encode a picture as an I-type picture to be displayed temporally later than the B-type picture. As a result, the order of the encoded data sequence is different from that of displayed pictures. For example, in encoding a picture a0 as a B-type picture, a picture a2, which is temporally later than the picture a0 by two pictures, is first encoded as an I-type picture.

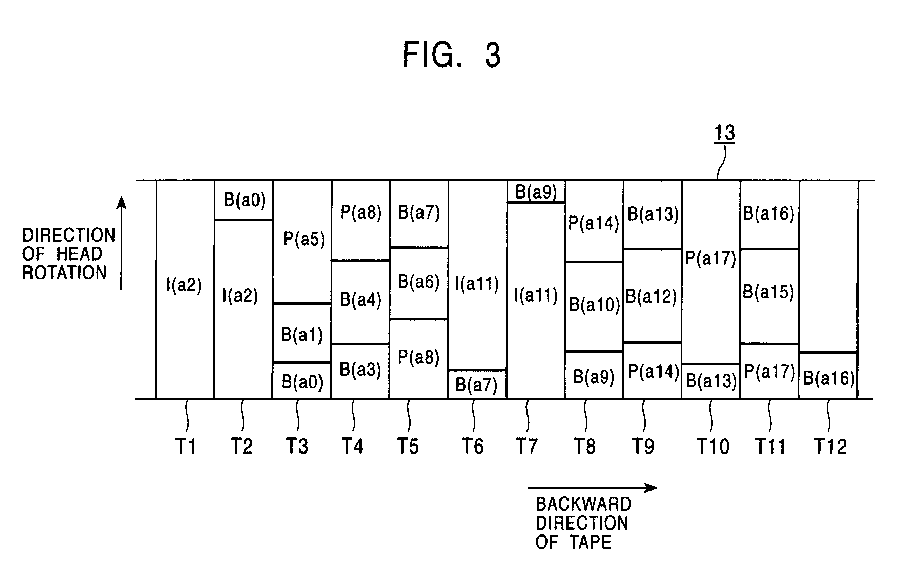

Fig. 3 illustrates an example of data arrangement in relation to tracks after the MPEG-encoded picture data is recorded on the tape 13 by a helical-scanning method. According to the helical-scanning method, tracks are slantingly arranged, but are indicated at right angles for simple representation. The thick lines shown in Fig. 3 designate the border of the pictures.

The picture I(a2) is partially recorded on the first track T1, the remaining portion of the picture I(a2) and part of the picture B(a0) are recorded on the track T2, and the remaining portion of the picture B(a0), the picture B(a1), and the picture P(a5) are recorded on the track T3. The data length varies among the individual pictures, which is one of the characteristics of MPEG encoding.

After encoding, the MPEG bitstream is directly recorded on the tape 13 in the order of I(a2), B(a0), and B(a1). Accordingly, the order of the recorded bitstream, as well as the encoded data sequence, is different from that of the original pictures.

It is now assumed that an image-splicing operation is performed in the following manner. While the tape 13 having the recorded pictures, such as those shown in Fig. 3, is being reproduced, it is temporarily suspended, and then, another image is superimposed on part of the base image a. During this splicing operation, the system control block 22 is operated as follows.

According to the key input information S7 from the user, the system control block 22 starts reproducing pictures from the tape 13, and then temporarily suspends the reproducing operation at the position of the first picture on which another picture is to be superimposed, thereby designating the editing point. Subsequently, the system control block 22 sets the recording and reproducing apparatus in the recording-suspending mode, and then changes the state of the apparatus into the recording mode from the picture at which recording is started by referring to the picture to be input.

The superimposition of an image b on the base image a on the tape 13 is described in detail below by considering the following four cases, i.e., the reproducing operation is suspended after a I-type picture, a P-type picture, and two different B-type pictures.

### (Reproducing operation suspended after I(a11))

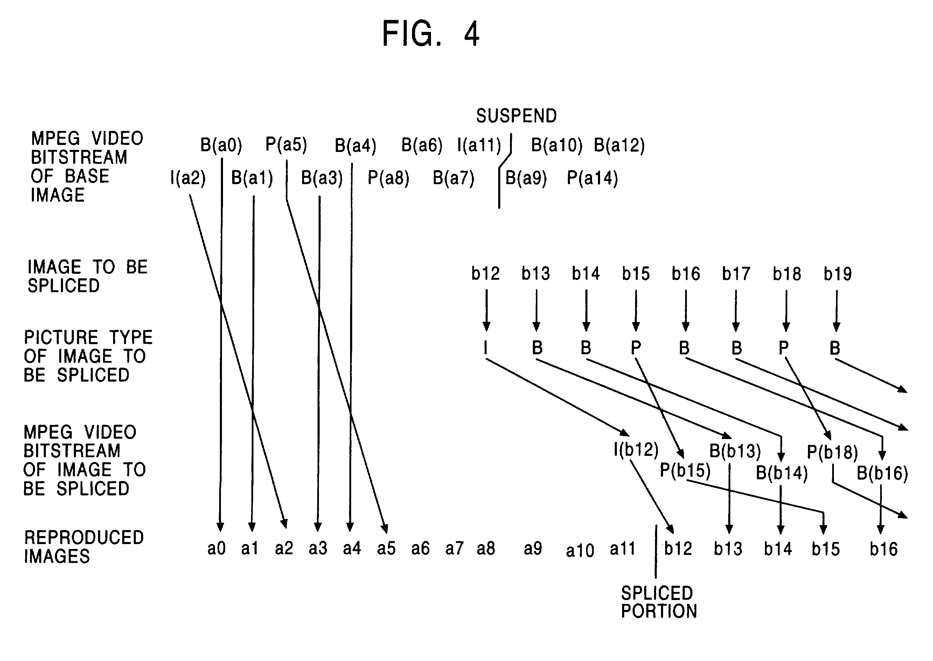

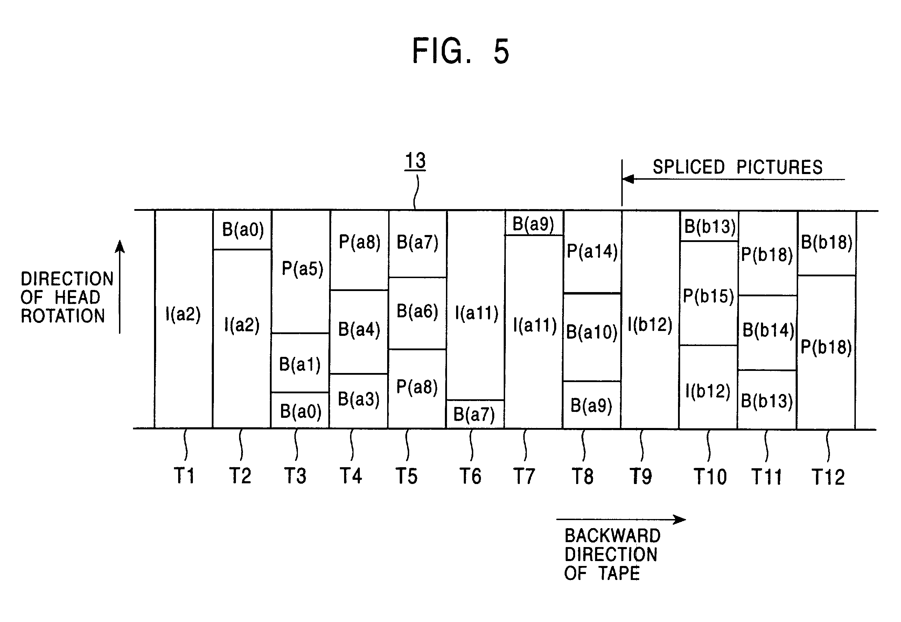

Fig. 4 illustrates how the reproduced pictures are viewed when the image b is superimposed on the image a after the picture I(a11), and Fig. 5 illustrates the data arrangement on the tape 13 after the image b is superimposed.

The final picture of the image a which should be retained is I(all), in which case, I(all) and all the B-type pictures which refer to this I-picture are retained, and then, recording of the image b is started. The reason is as follows. In the display order, the picture I(a11) is located after the pictures B(a9) and B(a10). On the tape 13, however, the picture I(a11) is recorded before the pictures B(a9) and B(a10), as illustrated in Fig. 5. Accordingly, all the data of I(a11), B(a9), and B(a10) are retained, after which the image b is recorded starting from the picture I(b12).

Since the picture B(a10) of the base image a is recorded on the track T8 on the tape 13, as shown in Fig. 5, the recording of pictures of the image b is started from the track T9 in the order of I(b12), P(b15), and B(b13). B(b10) and B(b11) are not recorded since they are not necessary. The picture P(a14), which remains in the track T8, is unnecessary, and thus, I(b12) may be recorded from P(a14).

After recording, when the spliced portion is reproduced, the overall reproduced pictures are viewed in the order of B(a10), I(a11), I(b12), B(b13), and B(b14), as shown in Fig. 4, thereby achieving smooth unbroken pictures. The spliced portion is between I(a11) and I(b12), and the editing precision is ±0 frames.

### (Reproducing operation suspended after P(a5))

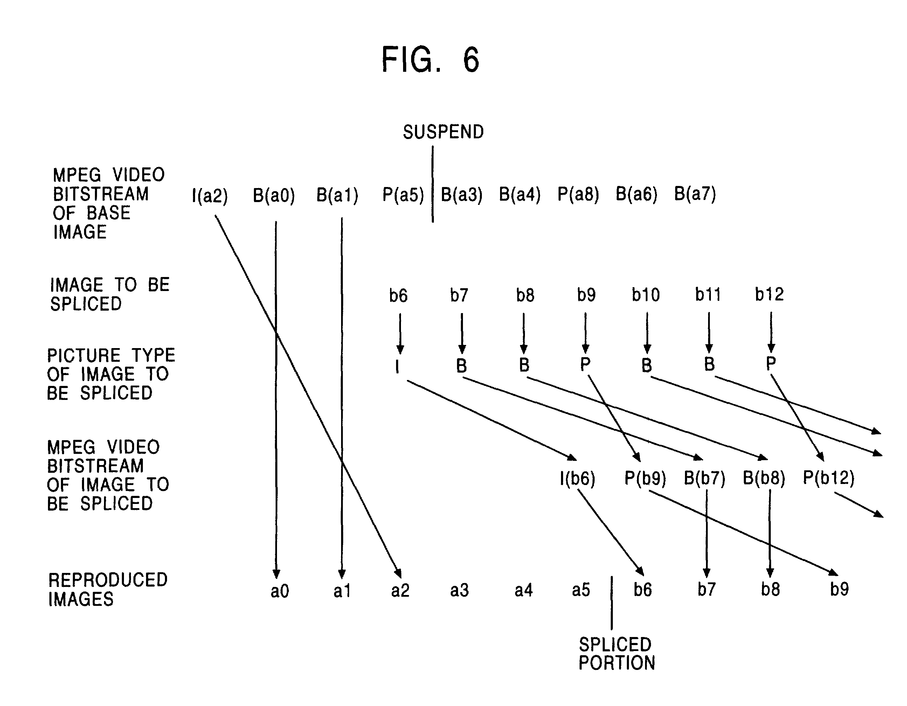

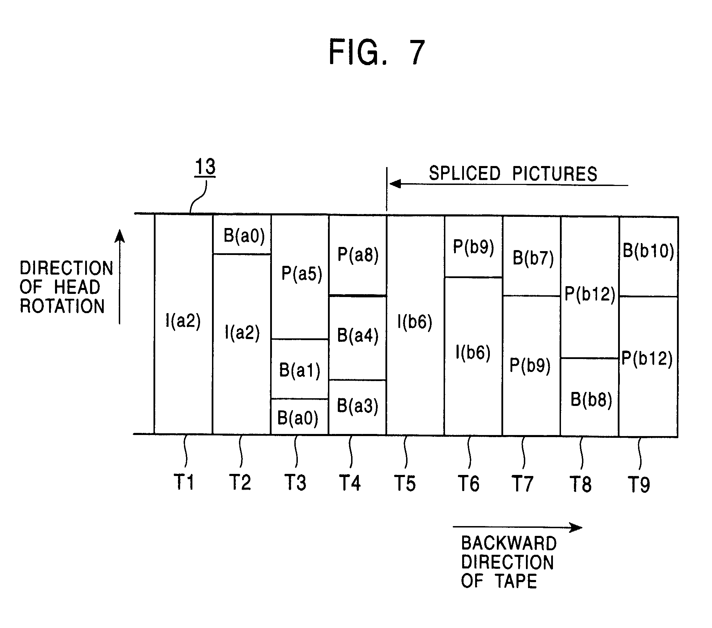

Fig. 6 illustrates how the reproduced pictures are viewed when the image b is superimposed starting from the picture I(b6) after the picture P(a5), and Fig. 7 illustrates the data arrangement on the tape 13 after the image b is superimposed.

The final picture of the image a which should be retained is P(a5), in which case, P(a5) and all the B-type pictures which refer to this P-type picture are retained, and then, recording of the image b is started. The reason is as follows. In the display order, the picture P(a5) is located after the pictures B(a3) and B(a4). On the tape 13, however, the picture P(a5) is recorded before the pictures B(a3) and B(a4), as illustrated in Fig. 7. Accordingly, all the data of P(a5), B(a3), and B(a4) are retained, after which the image b is recorded starting from the picture I(b6).

Since the picture B(a4) of the base image a is recorded on the track T4 on the tape 13, as shown in Fig. 7, the recording of pictures of the image b is started from the track T5 in the order of I(b6), P(b9), and B(b7). The picture P(a8), which remains in the track T4, is unnecessary, and thus, I(b6) may be recorded from P(a8).

After recording, when the spliced portion is reproduced, the overall reproduced pictures are observed in the order of B(a4), P(a5), I(b6), B(b7), and B(b8), as illustrated in Fig. 6, thereby achieving smooth unbroken pictures. The spliced portion is between P(a5) and I(b6), and the editing precision is ±0 frames.

### (Reproducing operation suspended after B(a6))

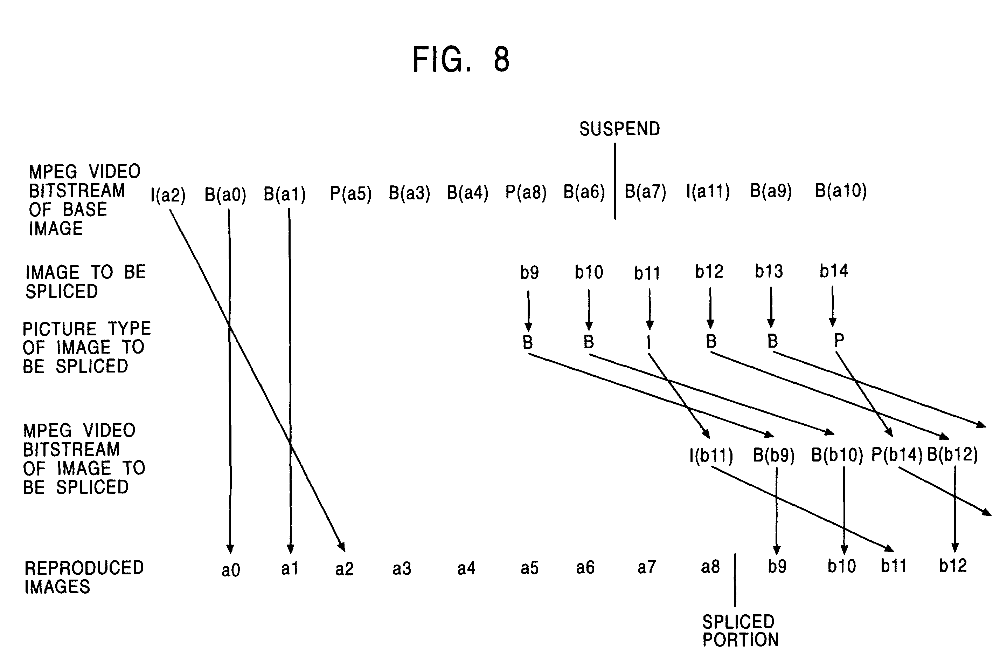

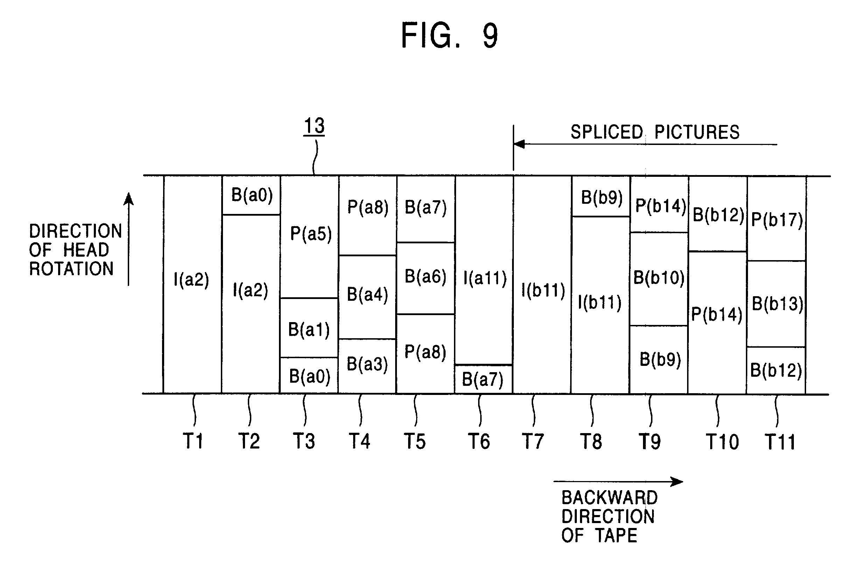

Fig. 8 illustrates how the reproduced pictures are viewed when the image b is superimposed after the picture B(a6), and Fig. 9 illustrates the data arrangement on the tape 13 after the image b is recorded.

The final picture of the base image a which should be retained is B(a6), in which case, B(a6) and all the B-type pictures continuous from B(a6) are retained, and then, recording of the image b is started. This is because B(a6) cannot be completely reproduced without P(a8), and the resulting image including P(a8) becomes imperfect without B(a7).

Accordingly, all the data of B(a6) and B(a7) are retained, as shown in Fig. 8, after which the image b is recorded starting from the picture I(b11). The reason is as follows. Although in the display order, the picture B(b9) and B(b10) are located before I(b11), the picture I(b11) is recorded before the picture B(b9), as shown in Fig. 8, in the order of the MPEG bitstream.

Since the picture B(a7) of the base image a is recorded on the track T6 on the tape 13, as shown in Fig. 9, the recording of pictures of the image b is started from the track T7 in the order of I(b11), B(b9), and B(b10). The picture I(a11), which remains in the track T6, is unnecessary, and thus, I(b11) may be recorded from I(a11).

After recording, when the spliced portion is reproduced, the reproduced pictures are observed in the order of B(a7), P(a8), B(b9), B(b10), and I(b11), as shown in Fig. 8. The spliced portion is between P(a8) and B(b9), and the editing precision is +2 frames. The symbol + indicates the direction in which reproduction is delayed behind the editing point.

### (Reproducing operation suspended after B(a7))

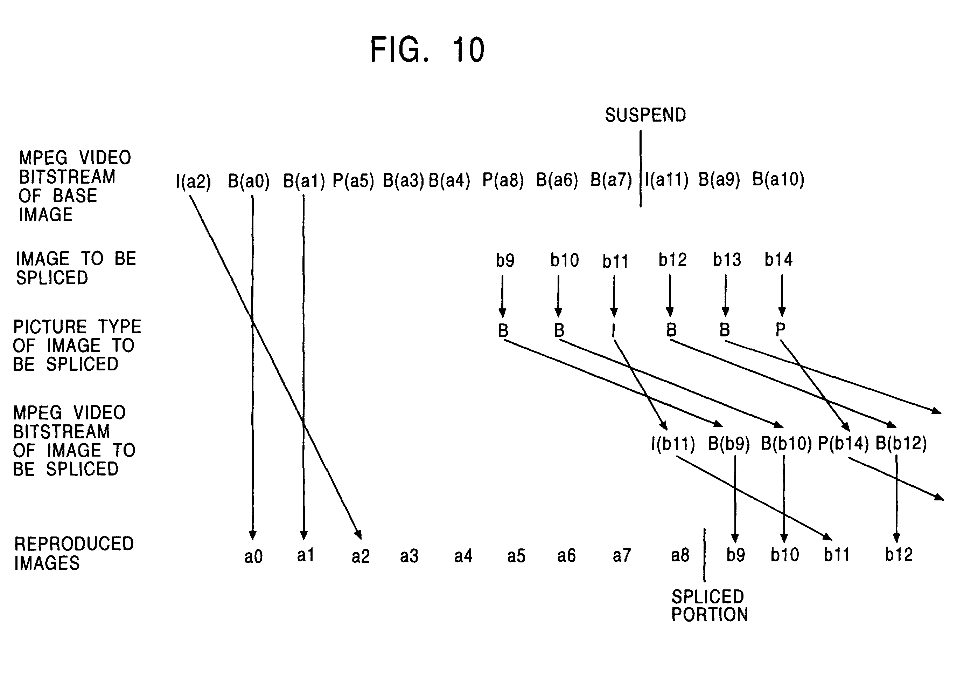

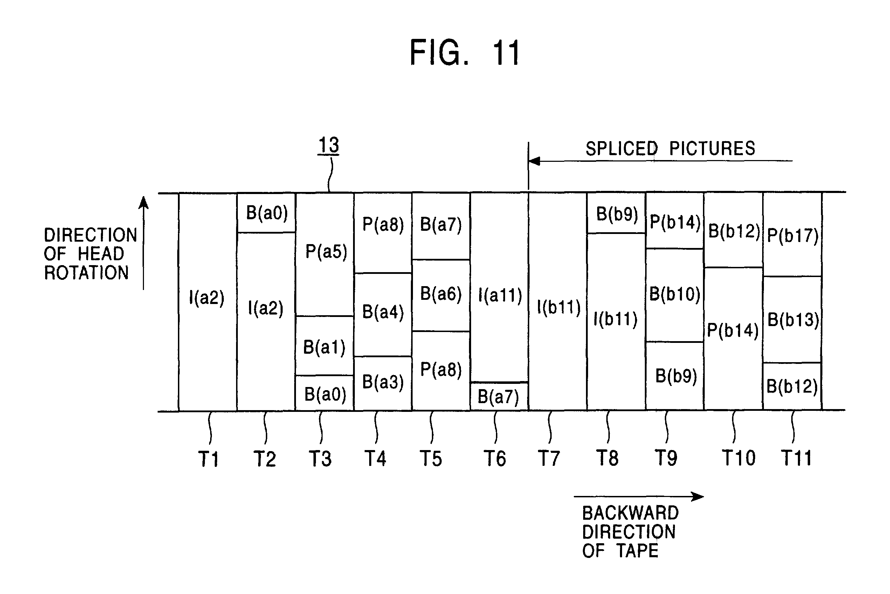

Fig. 10 illustrates how the reproduced pictures are viewed when the image b is superimposed after the picture B(a7), and Fig. 11 illustrates the data arrangement on the tape 13 after the image b is recorded.

The final picture of the image a which should be retained is B(a7), in which case, B(a7) and all the B-type pictures continuous from B(a7) are retained, and then, recording of the image b is started.

Accordingly, all the data up to B(a7) are retained, after which the image b is recorded starting from the picture I(b11). The reason is as follows. Although in the display order the picture B(b9) and B(b10) are located before I(b11), the picture I(b11) is recorded before the picture B(b9), as illustrated in Fig. 10, in the order of the MPEG bitstream.

Since the picture B(a7) of the base image a is recorded on the track T6 on the tape 13, as shown in Fig. 11, the recording of pictures of the image b is started from the track T7 in the order of I(b11), B(b9), and B(b10), resulting in the same data arrangement as that in Fig. 9. The picture I(a11), which remains in the track T6, is unnecessary, and thus, I(b11) may be recorded from I(a11).

After recording, when the spliced portion is reproduced, the reproduced pictures are observed in the order of B(a7), P(a8), B(b9), B(b10), and I(b11), as shown in Fig. 10. The spliced portion is between P(a8) and B(b9), and the editing precision is +1 frame. The symbol + indicates the direction in which reproduction is delayed behind the editing point.

According to the above description, in splicing different images, recording is basically started from an I-type picture, and any B-type pictures encoded with reference to this I-type picture are retained, thereby achieving unbroken continuous pictures.

The splicing operation is performed in the interval at which an I- or P-type picture appears, generally, three frames.

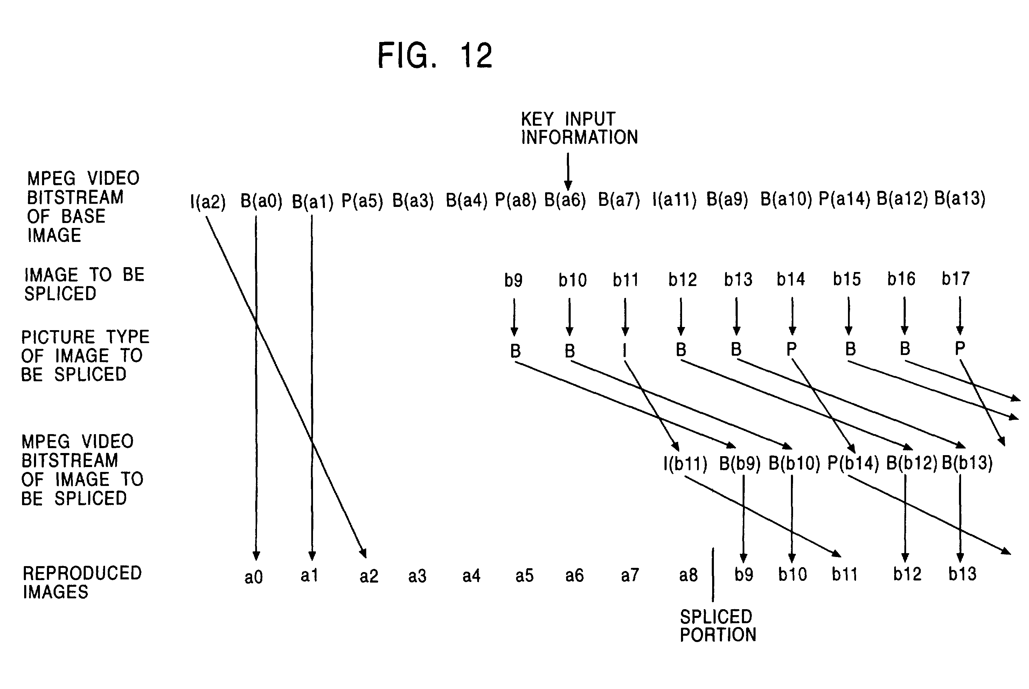

As another example of the image splicing operation, the state of the recording and reproducing apparatus is changed from the recording mode to the recording-suspending mode, and back to the recording mode. This example is stated below with reference to Figs. 12 through 14.

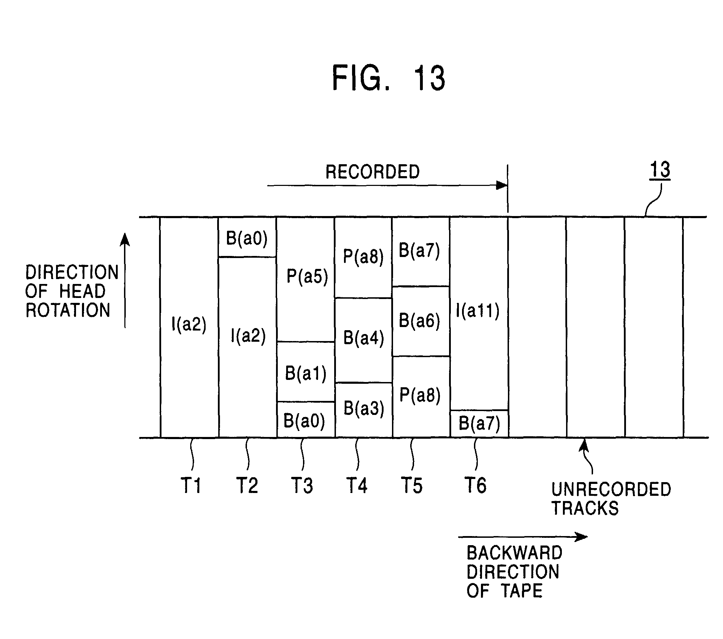

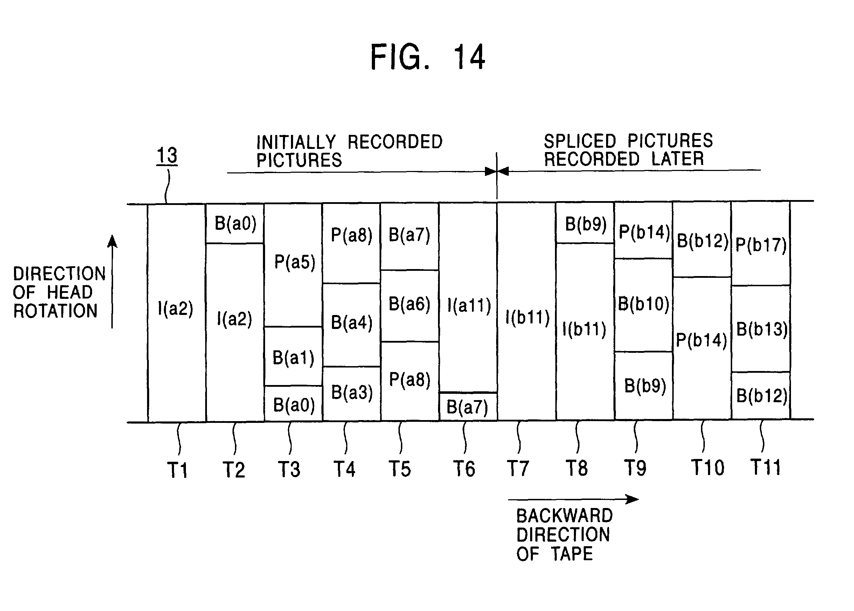

Fig. 12 illustrates how the reproduced pictures are viewed when an image-splicing operation is performed by changing the state of the apparatus from the recording mode to the recording-suspending mode, and back to the recording mode. Fig. 13 illustrates the data arrangement on the tape 13 when the state of the recording and reproducing apparatus is changed from the recording mode to the recording-suspending mode. Fig. 14 illustrates the data arrangement on the tape 13 when different images are spliced by changing the state of the recording and reproducing apparatus from the recording mode to the recording-suspending mode, and back to the recording mode.

The control operation executed by the system control block 22 is roughly the same as that performed when the editing point is designated after suspending the reproducing operation, and then, another image is superimposed on the base image, as previously discussed. In this operation, however, the position of the editing point is automatically specified when the apparatus changes from the recording mode to the recording-suspending mode.

When the key input information S7, indicating the change of the state from the recording mode to the recording-suspending mode, designates the picture B(a6) shown in Fig. 12, the apparatus will enter the recording-suspending mode after the following two pictures are recorded. The reason is as follows. Since B(a6) has been encoded with reference to the following P(a8), P(a8) is essential to reproduce a perfect image. Accordingly, pictures up to P(a8), which is positioned after B(a6) by two pictures, are recorded.

Thus, recording is suspended after recording B(a6) and B(a7), as illustrated in Fig. 13, i.e., pictures are recorded up to the track T6. On the track T6, the first part of I(a11), which is unnecessary, is recorded, in which invalid data may be recorded, or information indicating the presence of invalid data may be recorded.

Thereafter, the image b is recorded starting from the picture B(b9). The first two pictures are B-type pictures, which refer to the subsequent I-type picture, and then, the I-type picture follows.

Since the picture B(a7) of the base image a is recorded on the track T6 of the tape 13, as shown in Fig. 14, the recording of the image b is started from the track T7 in the order of I(b11), B(b9), and B(b10).

After recording, when the spliced portion is reproduced, the reproduced pictures are observed, as illustrated in Fig. 12, in the order of B(a7), P(a8), B(b9), B(b10), and I(b11). The spliced portion is between P(a8) and B(b9), and the editing precision is ±0 frames.

A deviation of the actual picture from the target picture to be recorded caused by the key input timing is one of ±0 frames, +1 frame, and +2 frames, as in the case of the deviation generated when an image-splicing operation is conducted by designating the editing point after suspending the reproducing operation.

In practice, an extra delay time is generated until the recording of pictures is actually finished, and thus, the above-described processing is executed by considering this delay time.

As discussed above, when the final picture of the base image is a B-type picture, the B-type picture and all the B-type pictures continuous from the above B-type picture are recorded, thereby completing the recording of the base image.

When the final picture of the base image is an I-type picture, the I-type picture and all the B-type pictures which have been encoded with reference to this I-type picture are recorded, since in the display order the B-type pictures are positioned before the I-type picture. For example, if I(a11) is designated, B(a9) and B(a10), which have been encoded with reference to I(a11), are also recorded.

Similarly, when the final picture of the base image is a P-type picture, the P-type picture and all the B-type pictures which have been encoded with reference to this P-type picture are recorded, since in the display order the B-type pictures are positioned before the P-type picture. For example, if P(a8) is designated, B(a6) and B(a7), which have been encoded with reference to P(a8), are also recorded.

The aforementioned recording and reproducing method is used in the recording and reproducing apparatus for recording and reproducing data on and from tape. However, this is only an example. The recording and reproducing method may be used in a recording and reproducing apparatus for recording and reproducing data on and from disk-type recording media. In recording data on disk-type recording media, tracks are merely substituted with sectors, since one track of tape recorded by helical scanning is equivalent to one sector or one circumference of the disk.

As is seen from the foregoing description, the video-signal recording and reproducing apparatus of the present invention offers the following advantages.

In performing an editing operation, i.e., an image-splicing operation, within one GOP, it is not necessary to decode the base image and then encode it again, thereby enhancing the simplicity of the configuration of the apparatus.

The deviation of the position of another image to be superimposed on the base image at which recording is actually started from the target position can be reduced to less than the interval at which an I- or P-type picture appears on the tape, considering when the resulting image is viewed on the display screen. For example, if an I- or P-type picture appears at the interval of three frames, the above-described deviation can be limited to 0, +1, or +2 frames. This also means that the editing precision can be 0, +1, or +2 frames.

The deviation of the target picture from the final picture of the base image which is actually recorded can be minimized to less than the interval at which an MPEG-encoded I- or P-type picture appears, considering when the resulting image is viewed on the display screen. For example, if an I- or P-type picture appears at the interval of three frames, the above-described deviation can be restricted to 0, +1, or +2 frames.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A video-signal recording and reproducing apparatus for recording a video signal encoded by an MPEG method on a recording medium and for reproducing the MPEG-encoded video signal from the recording medium, wherein the improvement comprises that an image-splicing operation is performed in a period at which one of an I-type picture or a P-type picture appears.

2. A video-signal recording and reproducing apparatus according to claim 1, wherein in performing the image-splicing operation, recording is started from an I-type picture, and said I-type picture and any B-type picture encoded with backward reference to said I-type picture are recorded.

3. A video-signal recording and reproducing apparatus according to claim 1, wherein in performing the image-splicing operation, when an I-type picture is designated as a final picture to be retained selected from pictures recorded on the recording medium, the designated I-type picture and all B-type pictures encoded with backward reference to said I-type picture are retained in the recording medium, and when a P-type picture is designated as a final picture to be retained selected from the pictures recorded on the recording medium, the designated P-type picture and all B-type pictures encoded with backward reference to said P-type picture are retained in the recording medium, and when a B-type picture is designated as a final picture to be retained selected from the pictures recorded on the recording medium, the designated B-type picture and all B-type pictures continuous from the designated B-type picture are retained in the recording medium, and then, an image to be spliced is recorded.

4. A video-signal recording and reproducing apparatus according to claim 1, wherein in performing the image-splicing operation, when an I-type picture is designated as a final picture of a base image, the designated I-type picture and all B-type pictures encoded with backward reference to said I-type picture are recorded, and when a P-type picture is designated as a final picture of the base image, the designated P-type picture and all B-type pictures encoded with backward reference to said P-type picture are recorded, and when a B-type picture is designated as a final picture of the base image, the designated B-type picture and all B-type pictures continuous from the designated B-type picture are recorded, and then, a recording operation is suspended.

5. A video-signal recording and reproducing method for use in a video-signal recording and reproducing apparatus for recording a video signal encoded by an MPEG method on a recording medium and for reproducing the MPEG-encoded video signal from the recording medium, wherein the improvement comprises that an image-splicing operation is performed in a period at which one of an I-type picture or a P-type picture appears.

6. A video-signal recording and reproducing method according to claim 5, wherein said image-splicing operation comprises a step of starting recording from an I-type picture, and a step of recording said I-type picture and any B-type picture encoded with backward reference to said I-type picture.

7. A video-signal recording and reproducing method according to claim 5, wherein in performing the image-splicing operation, when an I-type picture is designated as a final picture to be retained selected from pictures recorded on the recording medium, the designated I-type picture and all B-type pictures encoded with backward reference to said I-type picture are retained in the recording medium, and when a P-type picture is designated as a final picture to be retained selected from the pictures recorded on the recording medium, the designated P-type picture and all B-type pictures encoded with backward reference to said P-type picture are retained in the recording medium, and when a B-type picture is designated as a final picture to be retained selected from the pictures recorded on the recording medium, the designated B-type picture and all B-type pictures continuous from the designated B-type picture are retained in the recording medium, and then, an image to be spliced is recorded.

8. A video-signal recording and reproducing method according to claim 5, wherein in performing the image-splicing operation, when an I-type picture is designated as a final picture of a base image, the designated I-type picture and all B-type pictures encoded with backward reference to said I-type picture are recorded, and when a P-type picture is designated as a final picture of the base image, the designated P-type picture and all B-type pictures encoded with backward reference to said P-type picture are recorded, and when a B-type picture is designated as a final picture of the base image, the designated B-type picture and all B-type pictures continuous from the designated B-type picture are recorded, and then, a recording operation is suspended.
